## Europäisches Patentamt

## European Patent Office

## Office européen des brevets

(11) Publication number: **0 204 486 B1**

# EUROPEAN PATENT SPECIFICATION

(45) Date of publication of the patent specification: **17.10.90**

(21) Application number: **86304001.0**

(22) Date of filing: **27.05.86**

(51) Int. Cl.⁵: **B29C 43/14, B29C 43/18, B29C 43/20, B65D 41/50 // B29L31/56**

(54) Resin-laminated rubber plugs and manufacture thereof.

(30) Priority: **28.05.85 JP 113255/85**
**15.07.85 JP 106875/85**

(43) Date of publication of application:
**10.12.86 Bulletin 86/50**

(45) Publication of the grant of the patent:
**17.10.90 Bulletin 90/42**

(84) Designated Contracting States:
**DE FR GB IT**

(56) References cited:
**EP-A- 0 086 253**
**EP-A- 0 163 251**
**DE-A- 3 231 179**
**US-A- 2 705 211**
**US-A- 3 760 969**
**US-A- 4 441 621**
**US-A- 4 459 256**

(73) Proprietor: **DAIKYO GOMU SEIKO LTD., No. 38-2, Sumida 3-chome Sumida-ku, Tokyo(JP)**
Proprietor: **YAMANOUCHI PHARMACEUTICAL, No. 5-1 Nihonbashi-Honcho, 2-chome Chuo-ku, Tokyo(JP)**

(72) Inventor: **Tatsumi, Yutaka, 199-2 Ohmurashinden, Yaizu-shi Shizouka-ken(JP)**
Inventor: **Yoshitaka, Hideo, 7-8 Nishikokawa 1-chome, Yaizu-shi Shizuoka-ken(JP)**
Inventor: **Matsunaga, Tatsuya, 6-2 Ishizuminato-machi, Yaizu-shi Shizuoda-ken(JP)**
Inventor: **Sudo, Denpei, 38-2 Sumida 3-chome Sumida-ku, Tokyo(JP)**
Inventor: **Okuda, Tamotsu, 1993-4 Yamazaki, Noda-shi Chiba-ken(JP)**

(74) Representative: **Alexander, Thomas Bruce et al, Boult, Wade & Tennant 27 Furnival Street, London EC4A 1PQ(GB)**

## Description

This invention relates to a process for the production of a resin-laminated rubber plug for a medical vial and to such a plug.

It is known that rubber plugs for vials which contain vulcanisation accelerators or other compounding agents render medical or pharmaceutical products which are kept in containers closed by such rubber plugs liable to deterioration, usually by contamination with fine particles of the aforementioned accelerators or other agents.

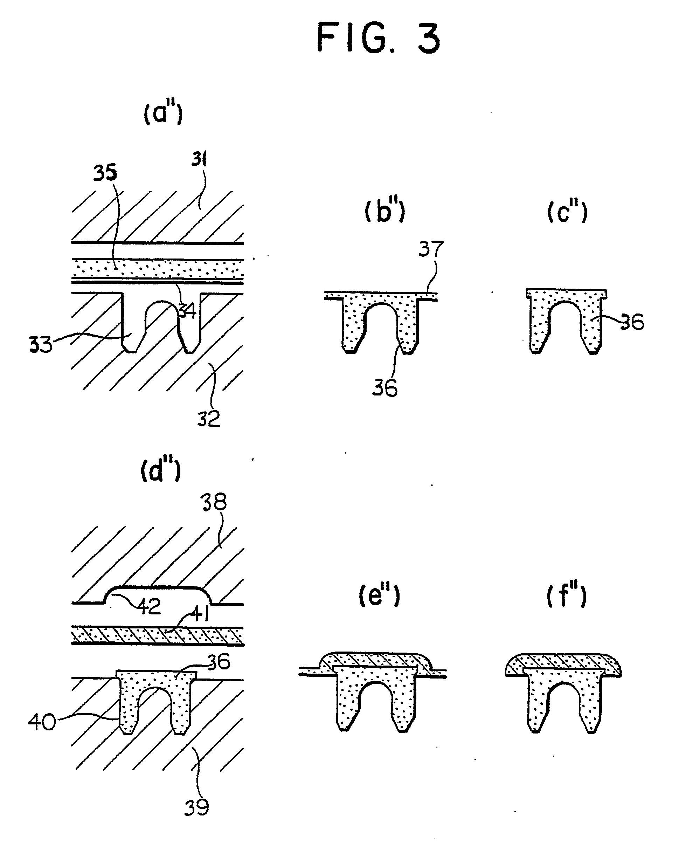

It has been proposed to laminate all the body portion of a rubber plug with a fluoro resin to prevent the rubber of the body portion from direct contact with a solution or other pharmaceutical product kept within the container closed by the plug. Examples are given by Japanese Patent Publications Nos. 9119/1979 and 1355/1977 and Japanese Utility Model Publications Nos. 27753/1969, 17831/1970 and 21346/1974. It has also been proposed to produce a rubber plug by means of a two stage moulding, as shown in Figure 3, and as also described in Japanese Patent Publication No. 53184/1982. This proposal comprises placing a chemical resistant resin film 34 and a non-vulcanised rubber sheet 35 in that order over a lower metal mould 2 which has an annular recess 33 for forming the hollow annular body portion 36 of the rubber plug. An upper mould 31 is placed over the sheet 35 and the film 34 and sheet 35 are pressed between the moulds to form a body 36 of which the lower surface is covered with the resin film and of which the upper rubber surface is exposed. A flange 37 formed during moulding is cut off to provide the plug body 36 with an outside diameter of, at most, two thirds that of the intended outside diameter of the head of the plug. The head is formed by a remoulding technique in which a layer of non-vulcanised rubber 41 is placed over the body 36, held in a recess 40 in a lower mould 39, and a head-forming mould 38 is pressed over the layer 11 to form the head of the plug; unwanted material forced out laterally from the head is removed to make the final form of the plug, as shown in Figure 3 (f'').

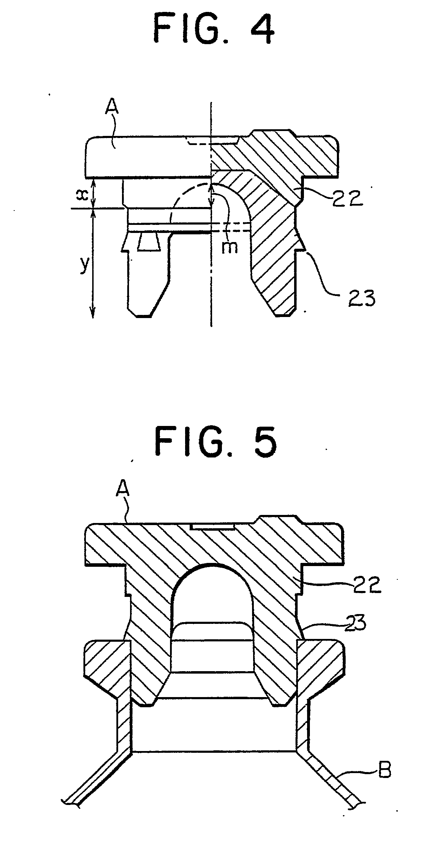

In order to improve the quality of some pharmaceutical preparations such as cephalosporin, it is necessary to maintain the airtightness of a vial for a very long time. It has been proposed to provide a resin-laminated rubber plug A as shown in Figure 4. In such a plug the outer circumference of the upper end 2 of the annular body of the plug is free from resin lamination, as explained in EP-A 0 172 613 filed 5th June 1985, a document according to Article 54 (3) and (4) EPC.

It is an object of the present invention to provide an improved rubber plug. According to the invention there is provided a process for the production of a resin-laminated rubber plug for a medical vial, which comprises a step of hot pressing and vulcanising a non-vulcanised compound rubber plate on one side of which a fluoro resin is laminated between a first metal mould for forming a body part which mould is provided with a hollow part of W-type in cross-section corresponding to the profile of the body part and another metal mould for forming an upper part which mould is provided with a hollow part of truncated cone type or is plate-shaped and thereby obtaining a primary moulded article consisting of the body part completely coated with the fluoro resin except for its upper surface, a step of removing the burr part, a step of charging the thus obtained primary moulded article in a second metal mould which is provided with a recess of W-type cross-section adapted to the profile of the body part and having a larger depth than the first metal mould, placing thereon a non-vulcanised compound rubber plate, hot pressing and vulcanising this rubber plate by the use of another metal mould for forming a cap which mould is provided with a hollow corresponding to the profile of the cap, and thereby forming an upper body part and cap and integrating them with the primary moulded article and a step of removing the burr part and thus obtaining a rubber plug in which the body is completely laminated with the fluoro resin except for the outer circumference of the upper part of the body.

## BRIEF DESCRIPTION OF THE DRAWINGS

Figures 1 and 2 are schematic views illustrating the production of rubber plugs according to the invention;

Figure 3 is a schematic drawing illustrating a previously known procedure for producing a rubber plug;

Figure 4 is a side sectional view of a rubber plug which can be made according to the present invention;

Figure 5 is a side sectional view of the rubber plug of Figure 4, in a position partly closing the mouth of a vial;

Figure 6 is a side sectional view of the rubber plug of Figure 4, shown as completely closing the mouth of a vial;

Figure 7 is a side sectional view of a rubber plug made according to the invention, completely closing the mouth of a vial and being fastened by an aluminium cap;

Figure 8 is a plan view of another rubber plug made in accordance with the invention;

Figure 9 is a partly sectioned side view taken on line I-I' in Figure 8; and

Figure 10 is a part sectional side view taken on the line II-II' in Figure 8.

## DETAILED DESCRIPTION OF THE PREFERRED EMBODIMENTS

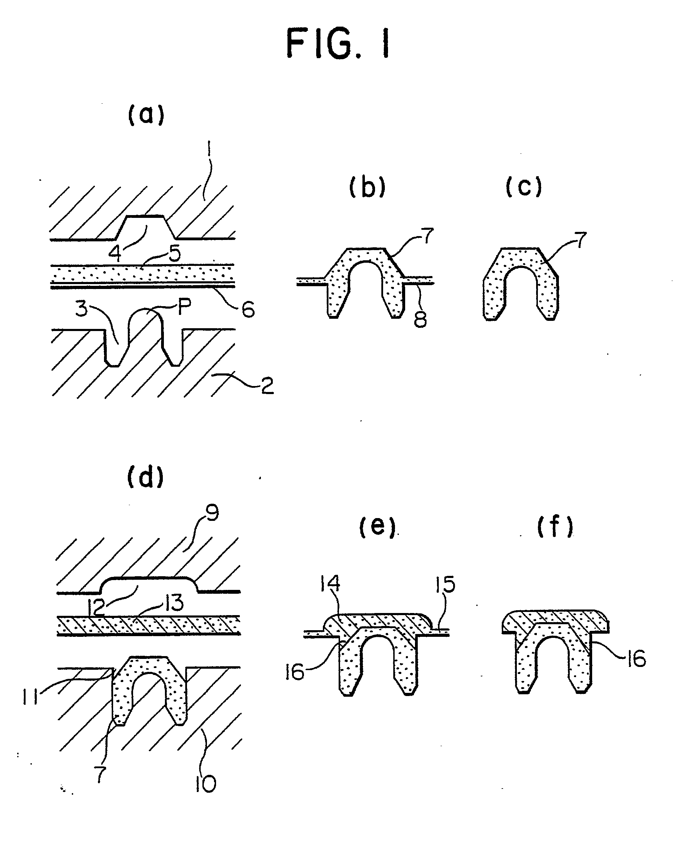

Figure 1 illustrates one preferred method of making a rubber plug according to the invention. As is shown in Figure 1(a) a layer or plate of non-vulcanised rubber 5 is provided with a lower protective layer 6, preferably of fluoro resin, and the laminate thus formed is pressed between an upper mould 1 and a lower mould 2. The lower mould has an annular recess 3, for forming the annular body part of the plug; in this method the central portion P of the lower mould protrudes above the outer rim of a annular recess 3. The laminate is pressed and vulcanised by the heated moulds. Preferably the upper mould has a truncated conical recess 4 of a diameter substantially that of the outside diameter of the recess 3 in the lower mould. The first moulding step produces as shown in Figure 1 (b) a body part 7 which has a burr or sprue 8, which is removed, as shown by Figure 1(c).

A second moulding stage is performed as shown in Figure 1 (d). The previously formed body part 7 is inserted in a lower mould 10 of which the annular recess 11 is somewhat deeper than the recess 3 in the mould 2. In the mould part 10, the central portion is of lesser height than the central part P of the mould 2. Otherwise the recess 11 of the mould 10 conforms to the shape of the body part 7 of the plug. Over the part 7 is disposed a plate 13 of non-vulcanised compound rubber, which is hot pressed and vulcanised by means of an upper mould 9 of which the recess 12 conforms to the desired shape of the upper surface of the head or cap of the plug. As may be seen from Figure 1(d),(e) and (f) this process forms a plug in which part of the outer surface of the body of the plug is formed in the second stage, in this preferred method because the recess 11 is deeper than the recess 3, and accordingly the plug is formed such that the upper region 16 of the body next to the cap 14 is formed free of the protective layer covering the lower portion and the inside of the hollow body of the plug. Unwanted material 15 formed during the second moulding stage is removed.

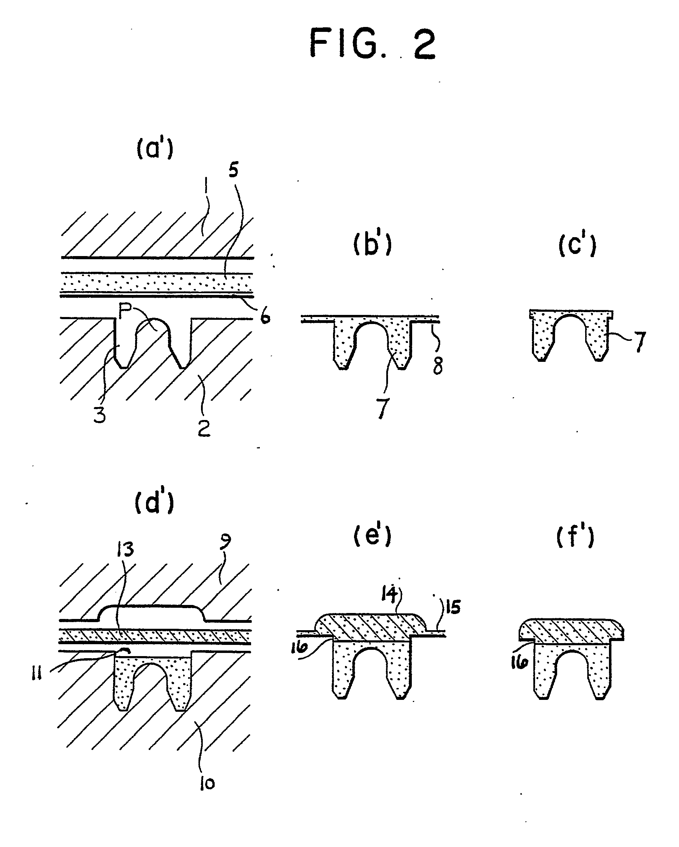

Figure 2 illustrates an alternative method which is similar to that shown in Figure 1 except that the mould 1 has no recess 4, whereby the upper surface of the body part T is made flat. However, this surface is preferably formed as a frusto cone to increase the internal height of the body portion. This enables the central part of the plug to be made thinner (facilitating its piercing by a hyperdermic needle) without requiring any hollowing of the cap, which can thereby be securely bonded to the body portion.

The non-vulcanised compound rubber preferably used in the present invention may be a synthetic or natural rubber such as butyl rubber, isoprene rubber, butadiene rubber, halogenated butyl rubber, ethylene propylene terpolymer, silicone rubber and similar materials. For the protective coating, there may be employed tetrafluoroethylene polymer, trifluorochloroethylene polymer, tetrafluoroethylene-hexafluoropropylene copolymer, vinylidene fluoride polymer, vinyl fluoride polymer, tetrafluoroethylene-ethylene copolymer or trifluorochlorothylene-ethylene copolymer. The protective resin film has preferably a thickness between 0.002 and 0.5 mm.

The pressing and heating conditions in each moulding stage according to Figure 1 or Figure 2 depend upon the fluoro resin layer employed, the particular rubber and compounding agents, the thickness of the rubber and so on. However, the first moulding stage is preferably carried out at a temperature between 150 and 175°C and a pressure between 40 and 70 kg/cm$^2$ for about 10 minutes, particularly 100 to 165°C and about 50 kg/cm$^2$ for about 15 minutes in an example in which the protective film is a tetrafluoroethylene-ethylene copolymer film and the compound rubber contains 58% of butyl rubber. The hot pressing and vulcanising step shown in Figure 1(d) is preferably carried out at a temperature of 160 to 175°C for about 8 minutes.

The outer surface of the body may be of the simple form shown in Figure 1(f) but may be in more complex form as shown, for example, in Figure 4 wherein the upper part of the outer surface of the body has a shoulder or step 22 and the lower part of the outer surface of the body has a projection or barb 23. The various moulds must of course be modified accordingly.

The particular plug shown in Figure 4 has a body part of which the height of the shoulder (corresponding to the exposed rubber surface of the body) is x, and the lower portion of the outer surface of the body has a height y. In this embodiment the internal height of the body is greater than the height y, the difference in height m being preferably in the range 0.1 to 5mm. The airtightness when a vial is closed by the stopper is mainly determined by the height x which may be from 0.1 to 5mm. The pierceability of the head may be increased by an increase in the dimension m.

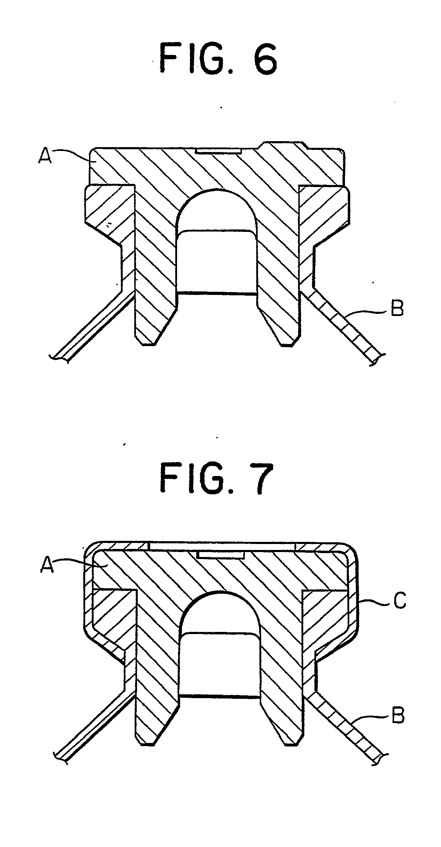

The protrusion or barb 23 (which may have a height between 0.1 and 1mm) may determine the position of the plug when a vial is half closed by the plug as shown in Figure 5; the protrusion prevents the stopper from sinking by virtue of the slippery surface of the fluoro-resin film. In use, a vial B is preferably half closed as shown in Figure 5, subjected to freeze drying in a freeze drying chamber and then completely closed by the plug, as shown in Figure 6. The stopper may be further secured by means of an aluminium cap C as shown in Figure 7.

When a rubber plug A is put into a vial B as shown in Figure 5, the plug is maintained at a constant height by the protrusions 4 even if the diameter of the mouth of a vial should alter from vial to vial. A constant quantity of vapour may be exhausted and a constant degree of vacuum may be held in the vial. Freeze drying may accordingly be completed in a shorter time. Complete closure is performed after the introduction of an inert gas such as nitrogen. In order to effect complete closure, a large press may be used. The protrusions on the body part act as a buffer to protect the vial from breakage.

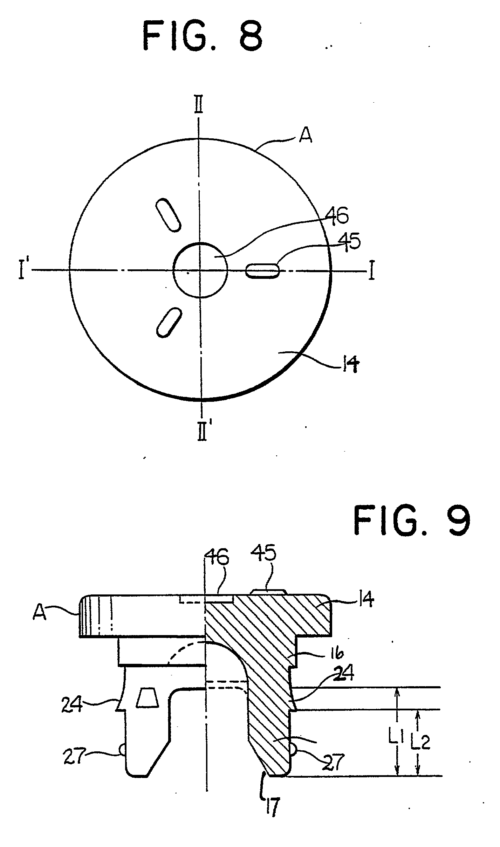

Figures 8 to 10 illustrate further details of a stopper as generally shown in Figure 4. In this embodiment the protrusions 24 on the body portion are in the form of semi-trigonal pyramids. The upper end 16 of the body is not but the lower portion 17 is provided with a complete coating of the chemical-resistant resin.

If as shown in Figure 9 the height of the body from the lower rim to the ceiling of the inner portion is represented by L1 and the height from the lower rim of the body to the protrusion is L2, the ratio L1 to L2 should preferably be between 1.7 and 1.5.

When the container or vial is in a half closed state, there is a danger that the rubber plug may incline or slip out of the mouth of the vial. To inhibit the tilting of the rubber plug, it may be provided with a further protrusion or set of protrusions 27 below the protrusion or set of protrustions 24.

As shown in Figures 8 and 9, the upper surface of the cap of the plug may be provided with ribs 45 and a central recess 46.

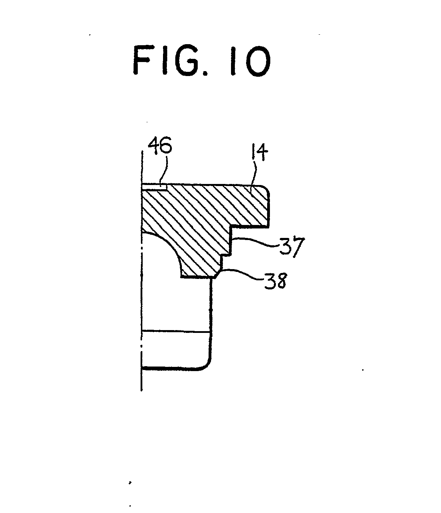

Figure 10 illustrates the formation of the upper portion 16 of the plug with two shoulders 37 and 38, of which the lower shoulder 38 is bevelled.

## Claims

1. A process for the production of a resin-laminated rubber plug for a medical vial, which comprises a step of hot pressing and vulcanising a non-vulcanised compound rubber plate (5) on one side of which a fluoro resin (6) is laminated between a first metal mould (2) for forming a body part which mould is provided with a hollow part (3) of W-type in cross-section corresponding to the profile of the body part and another metal mould (1) for forming an upper part which mould is provided with a hollow part of truncated cone type or is plate-shaped and thereby obtaining a primary moulded article consisting of the body part completely coated with the fluoro resin except for its upper surface, a step of removing the burr part (8), a step of charging the thus obtained primary moulded article in a second metal mould (10) which is provided with a recess (11) of W-type cross-section adapted to the profile of the body part and having a larger depth than the first metal mould, placing thereon a non-vulcanised compound rubber plate (13), hot pressing and vulcanising this rubber plate by the use of another metal mould (9) for forming a cap (14) which mould is provided with a hollow corresponding to the profile of the cap, and thereby forming an upper body part and cap and integrating them with the primary moulded article and a step (4) of removing the burr part (15) and thus obtaining a rubber plug in which the body is completely laminated with the fluoro resin except for the outer circumference of the upper part (16) of the body.

2. A method according to claim 1, wherein the said second metal mould (10) is provided with a recess (11) which is 0.1 to 5mm deeper than the first metal mould.

3. A method according to claim 1 or claim 2, wherein the first metal mould (2) is designed so as to form the leg part notched or cut at one or two positions.

4. A method according to claim 1 or claim 2, wherein the first metal mould is designed so as to form at least one protrusion (23) on the coated portion of the body.

5. A method according to claim 4, wherein the protrusions are four to eight in number and are small protrusions arranged symmetrically around the body.

6. A method according to claim 4, wherein the protrusion is in the form of a rib, semi-trigonal pyramid or shoulder.

7. A method according to claim 6, wherein the fluoro resin is a film with a thickness of 0.002 to 0.5mm.

8. A method according to anyone of the preceding claims, wherein the fluoro resin is selected from the group consisting of tetrafluoroethylene polymers, trifluorochloroethylene polymers, tetrafluoroethylene-hexafluoropropylene copolymers, vinylidene fluoride polymers, vinyl fluoride polymers, tetrafluoroethylene-ethylene copolymers and trifluorochloroethylene-ethylene copolymers.

9. A resin-laminated rubber plug for a medical vial, comprising an annular body (7) to be inserted into the mouth of the vial, the body being notched or cut at at least one position, and a cap (14) to contact the front surface of the vial mouth, in which the outer and inner surfaces of the annular body (7) are laminated with a chemical-resistant resin film (6) except for the outer circumference of the upper end of the annular body to expose there the rubber surface, the body having at least one protrusion (23, 24, 27) on the outer surface of the laminated portion.

## Patentansprüche

1. Verfahren zur Herstellung eines harzbeschichteten Gummistopfens für ein medizinisches Fläschchen, das einen Heißpreßschritt und die Vulkanisierung einer Gummiplatte (5) aus einer nicht-vulkanisierten Verbindung umfaßt, wobei eine Seite der Gummiplatte mit einem Fluorharz (6) zwischen einer ersten Metallform (2) für die Bildung eines Körperteils, wobei die Form mit einem Hohlteil (3), das im Querschnitt eine W-Form entsprechend dem Profil des Körperteils besitzt, ausgestattet ist und einer anderen Metallform (1) für die Bildung eines Oberteils, wobei die Form mit einem Hohlteil in Form eines Kegelstumpfes ausgestattet ist oder als Platte geformt ist, beschichtet ist, und wodurch ein erstes Formteil erhalten wird, das aus dem Körperteil besteht, das mit Ausnahme der oberen Oberfläche vollständig mit dem Fluorharz beschichtet ist, einen Schritt zur Entfernung der Preßnaht (8), einen Schritt der Beschickung des so erhaltenen ersten Formteils in eine zweite Metallform (10), die mit einer Vertiefung (11) in W-Form im Querschnitt, die an das Profil des Körperteils angepaßt ist und eine größere Tiefe als die erste Metallform aufweist, ausgestattet ist, das Auflegen einer Gummiplatte (13) darauf aus einer nicht-vulkanisierten Verbindung, Heißpressen und Vulkanisierung dieser Gummiplatte durch die Verwendung einer anderen Metallform (9) zur Bildung einer Kappe (14), wobei die Form mit einem Hohlteil entsprechend dem Profil der Kappe ausgestattet ist, und dadurch Bildung eines oberen Körperteils und einer Kappe, und Integration dieser Teile in den ersten Formteil, und einen Schritt (4) zur Entfernung der Preßnaht (15), wobei so ein Gummistopfen erhalten wird, bei dem der Körper mit Ausnahme des äußeren Umfanges des Oberteils (16) des Körpers vollständig mit dem Fluorharz beschichtet ist.

2. Verfahren nach Anspruch 1, bei dem die zweite Metallform (10) mit einer Vertiefung (11) ausgestattet ist, die 0,1 bis 5 mm tiefer ist als die erste Metallform.

3. Verfahren nach Anspruch 1 oder 2, bei dem die erste Metallform (2) so gestaltet ist, daß sie das Fußteil bildet, welches an einer oder zwei Stellen gekerbt oder ausgeschnitten ist.

4. Verfahren nach Anspruch 1 oder 2, bei dem die erste Metallform so gestaltet ist, daß mindestens ein Vorsprung (23) auf dem beschichteten Teil des Körpers gebildet wird.

5. Verfahren nach Anspruch 4, bei dem vier bis acht kleine Vorsprünge vorhanden sind, die symmetrisch um den Körper herum angeordnet sind.

6. Verfahren nach Anspruch 4, bei dem der Vorsprung die Form einer Rippe, einer semitrigonalen Pyramide oder einer Schulter aufweist.

7. Verfahren nach Anspruch 6, bei dem das Fluorharz ein Film mit einer Dicke von 0,002 bis 0,5 mm ist.

8. Verfahren nach einem der vorhergehenden Ansprüche, bei dem das Fluorharz aus der Gruppe bestehend aus Tetrafluorethylenpolymere, Trifluorchlorethylenpolymere, Tetrafluorethylen-hexafluorpropylencopolymere, Vinylidenfluoridpolymere, Vinylfluoridpolymere, Tetrafluorethylen-ethylencopolymere und Trifluorchlorethylen-ethylencopolymere ausgewählt wird.

9. Harzbeschichteter Gummistopfen für ein medizinisches Fläschchen, enthaltend einen ringförmigen Körper (7), der in die Öffnung des Fläschchens gesteckt wird, wobei der Körper an mindestens einer Stelle gekerbt oder ausgeschnitten ist, und eine Kappe (14), um die oben liegende Oberfläche der Fläschchenöffnung zu berühren, wobei die äußeren und inneren Oberflächen des ringförmigen Körpers (7) mit einem chemikalienresistenten Harzfilm (6) mit Ausnahme des äußeren Umfanges des oberen Endes des ringförmigen Körpers, um dort die Oberfläche des Gummis freizulegen, beschichtet ist, wobei der Körper mindestens einen Vorsprung (23, 24, 27) auf der äußeren Oberfläche des beschichteten Anteils aufweist.

## Revendications

1. Procédé de fabrication d'un bouchon en caoutchouc revêtu de résine pour un flacon médical, qui comporte une opération de pressage à chaud et de vulcanisation d'une plaque de caoutchouc composite non vulcanisé (5) sur un côté de laquelle une résine fluorée (6) est appliquée entre un premier moule métallique (2) pour former un corps, moule qui est muni d'une partie creuse (3) en forme de W en coupe, correspondant au profil du corps et un autre moule métallique (1) pour former une partie supérieure, moule qui est muni d'une partie creuse tronconique ou en forme de plaque et obtenir ainsi un objet moulé primaire constitué du corps complètement revêtu de résine fluorée à l'exception de sa surface supérieure, une étape consistant à éliminer la bavure (8), une étape de chargement de l'objet moulé primaire ainsi obtenu dans un second moule métallique (10) qui est muni d'un évidement (11) en forme de W en coupe, adapté au profil du corps et possédant une profondeur supérieure à celle du premier moule métallique, la mise en place sur celui-ci d'une plaque de caoutchouc composite non vulcanisé (13), le pressage à chaud et la vulcanisation de cette plaque de caoutchouc par l'emploi d'un autre moule métallique (9) pour former une coiffe (14), moule qui est muni d'une cavité correspondant au profil de la coiffe, et ainsi former un corps supérieur et une coiffe et les intégrer à l'objet moulé primaire et une étape (4) d'élimination de la bavure (15) et obtenir ainsi un bouchon de caoutchouc dans lequel le corps est complètement revêtu de la résine fluorée à l'exception de la circonférence extérieure de la partie supérieure (16) du corps.

2. Procédé selon la revendication 1, dans lequel ledit second moule métallique (10) est muni d'un évidement (11) qui est plus profond de 0,1 à 5 mm que le premier moule métallique.

3. Procédé selon la revendication 1 ou la revendication 2, dans lequel le premier moule métallique (2) est conçu de manière à former la partie de jambe avec des encoches ou évidée en un ou deux endroits.

4. Procédé selon la revendication 1 ou la revendication 2, dans lequel le premier moule métallique est conçu de manière à former au moins une partie saillante (23) sur la partie revêtue du corps.

5. Procédé selon la revendication 4, dans lequel les parties saillantes sont au nombre de 4 à 8 et sont de petites parties saillantes disposées symétriquement autour du corps.

6. Procédé selon la revendication 4, dans lequel la partie saillante est sous la forme d'une arête, d'une pyramide semi-triangulaire ou d'un épaulement.

7. Procédé selon la revendication 6, dans lequel la résine fluorée est un film d'épaisseur comprise entre 0,002 et 0,05 mm.

8. Procédé selon l'une quelconque des revendications précédentes, dans lequel la résine fluorée est choisie parmi le groupe formé par les polymères de tétrafluoréthylène, des polymères de trifluorochloréthylène, des copolymères de tétrafluoréthylène-hexafluoropropylène, des polymères de fluorure de vinylidène, des polymères de fluorure de vinyle, des copolymères de tétrafluoréthylène-éthylène et des copolymères de trifluorochloréthylène-éthylène.

9. Bouchon de caoutchouc revêtu de résine pour un flacon médical, comportant un corps annulaire (7) destiné à être introduit dans le goulot du flacon, le corps étant encoché ou entaillé en au moins un endroit, et une coiffe (14) pour venir en contact de la surface antérieure du goulot du flacon, dans lequel les surfaces extérieure et intérieur du corps annulaire (7) sont revêtues d'un film de résine résistant aux produits chimiques (6) à l'exception de la circonférence extérieure de l'extrémité supérieure du corps annulaire pour y laisser à nu la surface du caoutchouc, le corps possédant au moins une partie saillante (23, 24, 27) sur la surface extérieure de la partie revêtue.

# FIG. I

(a)

(b)

(c)

(d)

(e)

(f)

# FIG. 2

(a')

(b')

(c')

(d')

(e')

(f')

# FIG. 3

(a")

(b")

(c")

(d")

(e")

(f")

# FIG. 4

# FIG. 5

# FIG. 6

A

B

# FIG. 7

A

C

B

# FIG. 8

# FIG. 9

# FIG. 10